(19) Europäisches Patentamt
European Patent Office
Office européen des brevets

(11) EP 2 666 824 B1

## (12) EUROPEAN PATENT SPECIFICATION

(45) Date of publication and mention of the grant of the patent:
**14.08.2019 Bulletin 2019/33**

(21) Application number: **12736160.8**

(22) Date of filing: **12.01.2012**

(51) Int Cl.:
*C08L 83/04* (2006.01)     *C08K 3/22* (2006.01)
*C08K 3/26* (2006.01)     *C08K 3/36* (2006.01)
*C08K 9/00* (2006.01)

(86) International application number:
**PCT/JP2012/050503**

(87) International publication number:
**WO 2012/098990 (26.07.2012 Gazette 2012/30)**

(54) **USE OF MAGNESIUM COMPOUND FOR IMPROVING WATER RESISTANCE OF CURED SILICONE RUBBER**

VERWENDUNG EINER MAGNESIUMVERBINDUNG ZUR ERHÖHUNG DER WASSERBESTÄNDIGKEIT VON GEHÄRTETEM SILIKON-GUMMI

UTILISATION D'UN COMPOSÉ DU MAGNÉSIUM POUR L'AMÉLIORATION DE LA RÉSISTANCE À L'EAU DE CAOUTCHOUC DE SILICONE DURCI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2011 JP 2011009673**

(43) Date of publication of application:
**27.11.2013 Bulletin 2013/48**

(73) Proprietor: **Dow Corning Toray Co., Ltd. Tokyo 100-0004 (JP)**

(72) Inventors:
• **HASEGAWA, Chiichiro**
**Ichihara-shi**
**Chiba 299-0108 (JP)**
• **MORITA, Yoshitsugu**
**Ichihara-shi**
**Chiba 299-0108 (JP)**

(74) Representative: **Murgitroyd & Company**
**Scotland House**
**165-169 Scotland Street**
**Glasgow G5 8PL (GB)**

(56) References cited:
JP-A- 9 151 324     JP-A- 10 212 414
JP-A- 11 199 776     JP-A- 2000 169 706
JP-A- 2001 316 590     JP-A- 2002 338 811
JP-A- 2006 291 078     JP-A- 2007 070 608
US-A- 4 681 913     US-A- 4 758 611
US-A- 5 424 352     US-A- 5 610 213
US-B1- 6 506 828

• DATABASE WPI Week 199433 19 July 1994 (1994-07-19) Thomson Scientific, London, GB; AN 1994-269567 XP002743414, -& JP H06 200080 A (TOSHIBA SILICONE KK) 19 July 1994 (1994-07-19)

Remarks:
The file contains technical information submitted after the application was filed and not included in this specification

EP 2 666 824 B1

**Description**

BACKGROUND

Technical Field

The present invention relates to a curable silicone rubber composition for various types of water supply components used in contact with water. The present invention also relates to a cured product of this composition, a water resistant cured silicone rubber, and use thereof.

The present application claims priority on the basis of patent application No. 2011-009673, which was filed in Japan on January 20, 2011.

Background Art

Silicone rubber products are widely used in the field of food products due to heat resistance and low contamination of food products and beverages. Moreover, the number of applications have increased for silicone rubber components in contact with warm or hot water due to use in applications that have become prevalent in recent years, such as hot water heaters utilizing nighttime electrical power.

Water such as tap water used for food products or beverages contains the chloride ion (chlorine ion), which is used mostly for disinfection. This chloride ion is mostly added to water in the form of sodium hypochlorite. Long-term contact of silicone rubber components with such water invites a lowering of water tightness.

In Japanese Unexamined Patent Application Publication No. H06-200080, the improvement of water tightness of a silicone rubber component is proposed by blending hydrotalcite in the silicone rubber component.

(Background Documents)

(Patent Documents)

Patent Document 1: Japanese Unexamined Patent Application Publication No. H06-200080.

SUMMARY OF INVENTION

Technical Problem

However, silicone rubber components (such as hoses and packings) used in long-term contact with water containing the chloride ion such as tap water have been found to sometimes have visual appearance failures (i.e. whitening or the like) or to have insufficient strength to withstand high temperature steam. This type of problem is noticeable for hot water, and particularly for hot water at temperatures greater than or equal to 40°C. For example, whitening or similar visual appearance failures can occur in the silicone rubber valves, hoses, packings, and joints of vessels, hot water heaters, or the like, or in the transfer tubing used for beverages, food products, or the like. This type of visual appearance failure cannot be prevented even if hydrotalcite is blended in the silicone rubber component.

The aforementioned visual appearance failure and insufficient strength is hypothesized to occur due to breaking of the siloxane bond by the chloride ion in water. However, elimination of chlorine from water is difficult except for some natural waters. Thus improvement of the silicone rubber products is required.

An object of the present invention is to impart good water resistance to a silicone rubber component used in contact with water, and to prevent or decrease visual appearance failures such as whitening or the like and the occurrence of insufficient strength to withstand high temperature steam.

Solution To Problem

The object of the present invention is achieved by a curable silicone rubber composition for water supply components that is characterized in that the composition includes at least one type of magnesium compound selected from the group that includes magnesium oxide, magnesium hydroxide, and magnesium carbonate.

The expression "water supply component" for the present invention refers to a component used in contact with water. Such water supply components are preferably used for washing equipment, piping, pools, water supply facilities, or the like; for beverage and food product applications utilizing warm water, hot water, steam, or the like; or for medical treatment applications. The "water supply component" is exemplified by valves, hoses, tubes, packings, seals, and joints.

In particular, the present invention relates to a water supply component comprising a water resistant cured silicone rubber;

the water resistant cured silicone rubber obtained by curing a curable silicone rubber composition;

the silicone rubber composition comprising at least one type of magnesium compound selected from the group consisting of magnesium oxide, magnesium hydroxide, and magnesium carbonate, wherein the composition comprises less than or equal to 3 %wt. of magnesium compound as claimed.

The present invention also relates to a method for improving water resistance of a cured silicone rubber;

the method comprising a step of including, in the cured silicone rubber, at least one type of magnesium compound selected from the group consisting of magnesium oxide, magnesium hydroxide, and magnesium carbonate, wherein the magnesium compound is present in an amount of less than or equal to 3 %wt. in the cured silicone rubber.

The present invention also relates to use of at least one type of magnesium compound selected from the group consisting of magnesium oxide, magnesium hydroxide, and magnesium carbonate;

for improving water resistance of a cured silicone rubber, wherein the magnesium compound is present in an amount of less than or equal to 3 %wt. in the cured silicone rubber.

Preferred embodiments of the invention are set forth in the dependent claims.

Associated methods are also described herein to aid in the understanding of the invention, but these do not form part of the claimed invention. Examples or embodiments described herein which do not fall under the definition of the claims do not form part of the present invention.

The water preferably includes a chloride ion and the water resistant cured silicone rubber may be used as a water supply component.

Advantageous Effects of Invention

The curable silicone rubber composition of the present invention is capable of increasing water resistance of a cured silicone rubber obtained by curing of the curable silicone rubber composition. The cured silicone rubber or the water supply component produced from the cured silicone rubber of the present invention, for example, is capable of preventing or decreasing visual appearance failures such as whitening or the like and the occurrence of insufficient strength to withstand high temperature steam, even when there is long-term contact with water that includes the chloride ion. Thus there is no worsening of visual appearance outside the permissible scope, even when the water supply component of the present invention has been in long-term contact with tap water, for example. In the presence of high temperature steam, loss of strength of the water supply component of the present invention does not exceed the permissible range.

The present invention improves the water resistance of cured silicone rubber particularly with respect to warm water, hot water, or steam. It is thus possible to use with advantage the cured silicone rubber, or water supply component manufactured therefrom, of the present invention in the field of beverages and food products using warm water, hot water, or steam, for example.

The water resistance improvement method, use (method) of the water resistance improvement method, and the water resistance improvement agent of the present invention may similarly improve water resistance of the cured silicone rubber, i.e. the silicone rubber cured product. Therefore, according to the present invention, water resistance of the water supply component formed from the cured silicone rubber may be increased. Because of this, the water supply component of the present invention can be used with advantage over a long time interval, even under conditions where there is contact with tap water at high temperature, for example.

DESCRIPTION OF EMBODIMENTS

Blister-like voids occur within the rubber interior part in the vicinity of the face contacting tap water of a cured silicone rubber that has been in long-term contact with tap water, especially with tap water at temperatures greater than or equal to 40°C. This results in white splotches, clouding of the entire surface, and, when it is worse, the surface contacting the tap water peels away. However, as a result of dedicated investigations by the inventors of the present invention, it was determined that visual appearance failure was prevented or decreased even when the cured silicone rubber was in long-term contact with tap water, particularly with tap water at a temperature greater than or equal to 40°C, by blending in the cured silicone rubber of at least one type of magnesium compound selected from the group consisting of magnesium oxide, magnesium hydroxide, and magnesium carbonate.

Therefore, the present invention uses at least one type of magnesium compound selected from the group including magnesium oxide, magnesium hydroxide, and magnesium carbonate for improvement of water resistance of a cured silicone rubber. A detailed description thereof is given hereinafter.

The curable silicone rubber composition for a water supply component of the present invention includes at least one type of magnesium compound selected from the group consisting of magnesium oxide ($MgO$), magnesium hydroxide ($Mg(OH)_2$), and magnesium carbonate. Examples of magnesium carbonate salts include magnesium carbonate ($MgCo_3$)

and basic magnesium carbonates ($mMgCO_3 \cdot Mg(OH)_2 \cdot nH_2O$, such as $3MgCO_3 \cdot Mg(OH)_2 \cdot 3H_2O$). These magnesium compounds may be hydrates or anhydrates. In addition, two or more magnesium compounds may be used in combination. Since the use of this type of magnesium compound is approved even by the FDA, the curable silicone rubber composition for a water supply component of the present invention is suitable for applications such as beverages and food products.

The magnesium compound selected as at least one type from the group consisting of magnesium oxide, magnesium hydroxide, and magnesium carbonate is used to improve water resistance of cured silicone rubber, i.e. the cured product of the curable silicone rubber composition of the present invention. Thus the magnesium compound selected as at least one type from the group consisting of magnesium oxide, magnesium hydroxide, and magnesium carbonate functions as a water resistance improvement agent for cured silicone rubber.

No particular limitation is placed on the lower limit of the compounded amount of the magnesium compound as long as the compounded amount is within a range capable of attaining the effect of the present invention. This compounded amount, based on total weight (mass) of the curable silicone rubber composition, is preferably greater than or equal to 0.01 wt.% (mass%), further preferably is greater than or equal to 0.03 wt.% (mass%), still further preferably is greater than or equal to 0.05 wt.% (mass%), and most preferably is greater than or equal to 0.1 wt.% (mass%). Moreover, no particular limitation is placed on the upper limit of the compounded amount of the magnesium compound as long as the compounded amount is within a range capable of attaining the effect of the present invention. This compounded amount, based on total weight (mass) of the curable silicone rubber composition, is preferably less than or equal to 5 wt.% (mass%), further preferably less than or equal to 3 wt.% (mass%), still further preferably less than or equal to 1 wt.% (mass%), and most preferably less than or equal to 0.5 wt.% (mass%).

The form of the magnesium compounds is not particularly limited, and can be, for example, bulk-like or particulate, but is preferably particulate. The expression "particulate" in this context may include roughly spherically-shaped particles rather than just spherical particles. An average particle diameter of the particulate magnesium compound is preferably less than or equal to 10 $\mu$m, further preferably is less than or equal to 8 $\mu$m, still further preferably is less than or equal to 6 $\mu$m, and particularly preferably is less than or equal to 1 $\mu$m. No particular limitation is placed on the lower limit of the average particle diameter of the particulate magnesium compound, and the average particle diameter is preferably greater than or equal to 1 nm, further preferably greater than or equal to 10 nm, still further preferably greater than or equal to 100 nm, and particularly preferably greater than or equal to 500 nm.

The magnesium compound may be surface treated. The surface treatment is exemplified by surface treatment by surface treatment agents such as aluminum compounds, zinc compounds, silicon compounds, fatty acids, and the like. The surface treatment preferably uses a silicon compound. Surface treatment is further preferably done using a silicone or one or multiple types of partially hydrolyzed silane condensates. The surface treatment particularly preferably uses a silane. The silane is exemplified by the following general formula (1):

$$R^1_{(4-a)}Si(OR^2)_a \qquad (1)$$

In the formula, $R^1$ represents a monovalent hydrocarbon group or a reactive functional group;
$R^2$ moieties each independently represent monovalent hydrocarbon groups; and
a is an integer ranging from 1 to 3; and a is preferably 3.

The monovalent hydrocarbon group is preferably a substituted or unsubstituted straight or branched monovalent hydrocarbon group having from 1 to 30 carbons, and examples thereof include methyl groups, ethyl groups, propyl groups, butyl groups, pentyl groups, hexyl groups, heptyl groups, octyl groups, and similar straight or branched alkyl groups having from 1 to 30 carbons; cyclopentyl groups, cyclohexyl groups, and similar cycloalkyl groups having from 3 to 30 carbons; vinyl groups, allyl groups, butenyl groups, and similar alkenyl groups having from 2 to 30 carbons; phenyl groups, tolyl groups, and similar aryl groups having from 6 to 30 carbons; benzyl groups, phenethyl groups, and similar aralkyl groups having from 7 to 30 carbons; and groups wherein the hydrogen atoms bonded to the carbon atoms of these groups are substituted at least partially by fluorine or a similar halogen atom, or an organic group having a hydroxyl group, an epoxy group, a glycidyl group, an acyl group, a carboxyl group, an ester group, an amino group, an amide group, a (meth)acryl group, a hydroxyl group, a mercapto group, an isocyanate group, or the like (however, the total number of carbons is from 1 to 30). A straight alkyl group having from 1 to 6 carbons or phenyl group is preferable and a methyl group, ethyl group, or phenyl group is more preferable.

The reactive functional group is defined as a vinyl group, an allyl group, a butenyl group, a hexenyl group or a similar alkenyl group; and a hydroxyl group, an epoxy group, a glycidyl group, an acyl group, a carboxyl group, an ester group, an amino group, an amide group, a (meth)acryl group, a hydroxyl group, a mercapto group, an isocyanate group, or similar reactive functional group or a monovalent organic group having said functional group. One or a plurality of functional groups may exist in the monovalent organic group. The reactive functional group is preferably a monovalent saturated or aromatic hydrocarbon group that has at least one of the aforementioned functional groups. Specific examples of the reactive functional group include 3-hydroxypropyl groups, 3-(2-hydroxyethoxy)propyl groups, 3-mercaptopropyl groups, 2,3-epoxypropyl groups, 3,4-epoxybutyl groups, 4,5-epoxypentyl groups, 2-glycidoxyethyl groups, 3-glycidoxypropyl groups, 4-glycidoxybutyl groups, 2-(3,4-epoxycyclohexyl) ethyl groups, 3-(3,4-epoxycyclohexyl)propyl groups, aminopropyl groups, N-methylaminopropyl groups, N-butylaminopropyl groups, N,N-dibutylaminopropyl groups, 3-(2-aminoethoxy)propyl groups, 3-(2-aminoethylamino)propyl groups, 3-methacryloxy propyl groups, 4-methacryloxy butyl groups, 3-acryloxypropyl groups, 4-acryloxybutyl groups, 3-carboxypropyl groups, 10-carboxydecyl groups, and 3-isocyanate propyl groups.

Although the definition or examples of the monovalent hydrocarbon group of $R^2$ is as described above, hydrogen of the monovalent hydrocarbon group may be substituted by an alkoxy group having from 1 to 12 carbons. The alkoxy group is exemplified by the methoxy group, ethoxy group, propoxy group, or the like.

Examples of the silane compound represented by general formula (1) include γ-methacryloxy group-containing organoalkoxysilanes, epoxy group-containing organoalkoxysilanes, alkenyl group-containing organoalkoxysilanes and alkenyl group-containing acetoxysilanes. Of these, examples of the γ-methacryloxy group-containing organoalkoxysilanes include γ-methacryloxypropyltrimethoxysilane, γ-methacryloxypropyltriethoxysilane, and γ-methacryloxypropylmethyldimethoxysilane; examples of the epoxy group-containing organosilanes include γ-glycidoxypropyltrimethoxysilane, γ-glycidoxypropyltriethoxysilane, and β-(3,4-epoxycyclohexyl)-ethyl trimethoxysilane; and examples of the alkenyl group-containing organoalkoxysilanes include vinyl trimethoxysilane, vinyl triethoxysilane, vinyl methyl dimethoxysilane, allyltrimethoxysilane, allyltriethoxysilane, allyltri(ethoxymethoxy)silane, butenyltrimethoxysilane, hexenyltrimethoxysilane, and hexenyltriethoxysilane. One type or multiple types of partially hydrolyzed condensates of such organoalkoxysilanes may be used.

The utilized amount of the surface treatment agent relative to 100 parts by weight (mass) of the magnesium compound is preferably in the range of 0.005 to 10 parts by weight (mass), further preferably is in the range of 0.01 to 10 parts by weight (mass), and particularly preferably is in the range of 0.1 to 5 parts by weight (mass).

The method of treating the surface of the magnesium compound by the surface treatment agent is exemplified by mixing the magnesium compound and the surface treatment agent, and then allowing sufficient time for contact between the magnesium compound and the surface treatment agent. During treatment of the magnesium compound by the surface treatment agent, heating may be used to promote the surface treatment, or a catalytic amount of an acidic substance (such as acetic acid, and phosphoric acid) or a basic substance (such as a trialkyl amine, quaternary ammonium salt, ammonia gas and ammonium carbonate) may be jointly used.

The curable silicone rubber composition for a water supply component of the present invention may further include silica microparticles. The physical strength of the cured product of the composition may be improved by such including of silica microparticles. Particularly, in order to cause sufficient improvement of physical strength of the obtained cured product, silica fine powder is preferably used that has a BET specific surface area of 30 to 400 $m^2$/g, a silica fine powder is further preferably used that has a BET specific surface area of 50 to 400 $m^2$/g, and a silica fine powder is most preferably used that has a BET specific surface area of 100 to 400 $m^2$/g. Dry-process silica, wet-process silica, or a mixture of these silicas, for example, can be used as silica microparticles. Moreover, the surface of the silica fine powder may be treated with a silicon compound such as an organoalkoxysilane, an organohalosilane and an organosilazane, or a cyclic diorganosiloxane oligomer such as an octamethyltetrasiloxane and a decamethylpentasiloxane.

Although any value may be used for the lower limit of the compounded amount of the silica fine powder in the curable silicone rubber composition of the present invention, in order to sufficiently increase the physical strength of the obtained cured product, the compounded amount of the silica fine powder relative to the total weight (mass) of curable silicone rubber composition is preferably greater than or equal to 1 wt.% (mass%), further preferably is greater than or equal to 2 wt.% (mass%), and most preferably is greater than or equal to 5 wt.% (mass%). Although no particular limitation is placed on the upper limit of the compounded amount of the silica fine powder, based on the total weight (mass) of the curable silicone rubber composition, the compounded amount of the silica fine powder is preferably less than or equal to 80 wt.% (mass%), further preferably is less than or equal to 50 wt.% (mass%), and most preferably is less than or equal to 30 wt.% (mass%).

The curable silicone rubber composition described herein may be a hydrosilylation curing type composition or a peroxide curing type composition.

If the curable silicone rubber composition is a hydrosilylation curing type composition, the curable silicone rubber composition may be a millable type hydrosilylation curing type silicone rubber composition or a liquid hydrosilylation curing type silicone rubber composition that includes:

(A) an organopolysiloxane that includes, within a single molecule, at least two alkenyl groups,
(B) organohydrogenpolysiloxane that includes, within a single molecule, at least two silicon-bonded hydrogen atoms, and
(C) a hydrosilylation reaction catalyst.

Organopolysiloxane of the component (A) is the main component of the silicone rubber composition and has at least two silicon-bonded alkenyl groups within a single molecule. The alkenyl group is exemplified by the vinyl group, allyl group, and propenyl group. Examples of organic groups other than the alkenyl group include: alkyl groups such as the methyl group, ethyl group, propyl group, butyl group, pentyl group, hexyl group, octyl group, decyl group and dodecyl group; aryl groups such as the phenyl group, and tolyl group; aralkyl groups such as the benzyl group, and β-phenylethyl group; and halogen-substituted alkyl groups such as the 3,3,3-trifluoropropyl group and 3-chloropropyl group. Molecular structure of the component (A) may be linear, branched-linear, ring-shaped, or net-like, and two or more types of organohydrogenpolysiloxanes may be used in combination. No particular limitation is placed on the molecular weight of the component (A), and organopolysiloxanes may be used ranging from low viscosity liquid type organopolysiloxanes to highly viscous gum-like organopolysiloxanes. However, in order to produce a rubber-like elastic body by curing, viscosity at 25°C is preferably greater than or equal to 100 mPa s.

The organohydrogenpolysiloxane (B) is a crosslinking agent for the silicone rubber composition. In the presence of the hydrosilylation reaction catalyst (C), the organohydrogenpolysiloxane (B) crosslinks/cures the silicone rubber composition by addition reacting the silicon-bonded hydrogen atom in the component (B) with the silicone-bonded alkenyl group in the component (A). The organohydrogenpolysiloxane of the component (B) has, within a single molecule, at least two silicon-bonded hydrogen atoms. Examples of the organic groups other than the silicon-bonded hydrogen atom include: alkyl groups such as the methyl group, ethyl group and propyl group; aryl groups such as the phenyl group and tolyl group; and substituted alkyl groups such as the 3,3,3-trifluoropropyl group and 3-chloropropyl group. The molecular structure of the component (B) may be linear, branched-linear, ring-shaped, or net-like, and two or more types of organohydrogenpolysiloxanes may be used in combination.

Although no particular limitation is placed on the molecular weight of the component (B), this molecular weight is preferably such that viscosity at 25°C is in the range of 3 to 10,000 cP. The compounded amount of the component (B) in the silicone rubber composition is an amount such that the molar ratio of the silicon-bonded hydrogen atoms in the composition to the silicon-bonded alkenyl groups in the composition is (0.5 : 1) to (20 : 1), and preferably is (1 : 1) to (3 : 1). This is because, relative to 1 mol of the silicon-bonded alkenyl groups in the composition, when the number of moles of the silicon-bonded hydrogen atoms in the composition is less than 0.5, the silicone rubber composition is unable to sufficiently cure, and when the number of moles of the silicon-bonded hydrogen atoms in the composition is greater than 20, foaming may occur in the cured product.

The hydrosilylation reaction catalyst (C) is a catalyst for curing a hydrosilylation curing type silicone rubber composition. A conventionally known hydrosilylation reaction catalyst may be used as the hydrosilylation reaction catalyst of the component (C), as exemplified by chloroplatinic acid; alcohol solutions of chloroplatinic acid; complexes of chloroplatinic acid with olefins, vinylsiloxanes, or acetylene compounds; platinum black; platinum type catalysts such as catalysts supporting platinum on a solid surface; palladium type catalysts such as tetrakis(triphenylphosphine) palladium; and rhodium type catalysts such as chlorotris(triphenylphosphine) rhodium. Among such catalysts, platinum type catalysts are preferred. The compounded amount of the component (C) relative to one million parts by weight (mass) of total of the component (A) and component (B) is preferably 0.1 to 500 parts by weight (mass) when converted to the catalyst metal element basis, and this compounded amount is further preferably 1 to 50 parts by weight (mass). This compounded amount is used since progress of curing is insufficient if this compounded amount is less than 0.1 parts by weight (mass), and since there is concern that it would be uneconomical to exceed 500 parts by weight (mass).

The hydrosilylation curing type curable silicone rubber of the present invention particularly preferably includes the above mentioned silica fine powder.

The hydrosilylation curing type curable silicone rubber composition may also include a curing retarder in order to adjust the curing rate and the workable time interval of the curable silicone rubber. Examples of curing retarders include alcohol derivatives having carbon-carbon triple bonds, such as 3-methyl-1-butyn-3-ol, 3,5-dimethyl-1-hexyn-3-ol, phenylbutynol and 1-ethynyl-1-cyclohexanol; ene-yne compounds such as 3-methyl-3-penten-1-yne and 3,5-dimethyl-3-hexen-1-yne; alkenyl group-containing low molecular weight siloxanes such as tetramethyltetravinylcyclotetrasiloxane and tetramethyltetrahexenylcyclotetrasiloxane; and alkyne-containing silanes such as methyl-tris(3-methyl-1-butyn-3-oxy)silane and vinyl-tris(3-methyl-1-butyn-3-oxy)silane.

The compounded amount of the curing retarder may be selected appropriately according to the method of utilization of the hydrosilylation curing type silicone rubber composition and the molding method. Generally, the compounded amount of the curing retarder relative to the total weight(mass) of the hydrosilylation curing type silicone rubber composition is 0.001% to 5 wt.% (mass%).

If the silicone rubber composition is a peroxide curing type silicone rubber composition, the curable silicone rubber composition of the present invention is preferably a millable type peroxide curing type silicone rubber composition, and generally includes the following:

  (D) an organopolysiloxane raw rubber; and
  (E) an organic peroxide compound.

The component (D) is the main agent of this composition, and it is possible to use a compound termed an organopolysiloxane raw rubber as this main agent. This type of organopolysiloxane raw rubber preferably has a viscosity greater than or equal to 1,000,000 mPa•s at 25°C, and further preferably greater than or equal to 5,000,000 mPa•s. Further, the behavior of this type of component (D) is gum-like. The Williams plasticity number is preferably greater than or equal to 50, and further preferably is greater than or equal to 100. Further, the degree of polymerization is normally 1,000 to 20,000, and the weight average molecular weight is normally greater than or equal to $20 \times 10^4$.

The organopolysiloxane raw rubber is exemplified by the organopolysiloxane represented by the following average unit formula (2):

$$R^3SiO_{(4-b/2)} \qquad (2)$$

In the formula, $R^3$ represents a monovalent hydrocarbon group,
and b represents a number ranging from 1.8 to 2.3.

The definition and examples of the monovalent hydrocarbon group are as described previously. However, in a peroxide curing type curable silicone rubber of the present invention, the component (D) is preferably an alkenyl group-containing organopolysiloxane raw rubber that has at least two alkenyl groups in a single molecule. For example, good curing properties and physical properties are obtained by use of an alkyl type organic peroxide compound as the curing agent, such as 2,5-dimethyl-2,5-di-t-butylperoxy hexane.

The molecular structure of the component (D) may include a linear chain structure or a branch-containing linear chain structure. The component (D) may be a homopolymer, a copolymer, or a mixture of these polymers. Specific examples of the siloxane unit constituting this component include dimethylsiloxane units, methylvinylsiloxane units, methylphenylsiloxane units, and methyl(3,3,3-trifluoropropyl)siloxane units. The groups present at the terminal of the molecular chain are exemplified by the trimethylsiloxy group, dimethylvinylsiloxy group, methylvinylhydroxysiloxy group, and dimethylhydroxysiloxy group. Examples of such organopolysiloxane raw rubbers include methylvinylpolysiloxane raw rubber capped at both molecular terminals with trimethylsiloxy groups, a copolymer raw rubber of methylvinylsiloxane and dimethylsiloxane capped at both molecular terminals with trimethylsiloxy groups, dimethylpolysiloxane raw rubber capped at both molecular terminals with dimethylvinylsiloxy groups, a copolymer raw rubber of methylvinylsiloxane and dimethylsiloxane capped at both molecular terminals with dimethylvinylsiloxy groups, a copolymer raw rubber of methylvinylsiloxane and dimethylsiloxane capped at both molecular terminals with dimethylhydroxysiloxy groups, a copolymer raw rubber of methylphenylsiloxane, methylvinylsiloxane, and dimethylsiloxane capped at both molecular terminals with methylvinylhydroxysiloxy groups, and a copolymer raw rubber of (3,3,3-trifluoropropyl)methylsiloxane, methylvinylsiloxane, and dimethylsiloxane capped at both molecular terminals with methylvinylhydroxysiloxy groups.

The component (E) is a curing agent, and it is possible to use any widely known organic peroxide compound known to be used as a curing agent for a silicone rubber composition. Such organic peroxide compounds are exemplified by benzoyl peroxide, dicumyl peroxide, cumyl-t-butyl peroxide, 2,5-dimethyl-2,5-di-t-butylperoxy hexane, di-t-butyl peroxide and bis(para-methylbenzoyl)peroxide. The compounded amount of the organic peroxide compound is preferably in the range of 0.05 to 15 parts by weight (mass) per 100 parts by weight (mass) of the component (D), and further preferably is in the range of 0.1 to 5 parts by weight (mass).

The previously described silica fine powder is particularly preferably included in the peroxide curing type curable silicone rubber of the present invention.

As long as the effect of the present invention is not lost, various types of other additives may be blended in the curable silicone rubber composition of the present invention, as exemplified by reinforcing fillers other than silica fine powders such as fumed titanium oxide or the like; non-reinforcing fillers such as ground quartz, crystalline silica, diatomaceous earth, asbestos, aluminosilicates, iron oxide, zinc oxide or calcium carbonate; and such fillers having undergone surface treatment using an organosilicon compound such as an organosilane or organopolysiloxane. Moreover, carbon blacks may be blended, as exemplified by acetylene black, furnace black or channel black. In addition, the curable silicone rubber composition according to the present invention may, if necessary, contain additives such as pigments, heat-resistant agents, flame retardants, internal release agents, plasticizers and non-functional silicone oils.

The curable silicone rubber composition of the present invention can be easily produced by homogeneously mixing a composition that contains the above-mentioned components and, if necessary, a variety of additives using a publicly known kneading means such as a Ross mixer, a two roll mill or a kneader mixer.

Further assuming a beverage or food product application, from the standpoint of there being no residue from the curing reaction, a hydrosilylation curing type silicone rubber is preferred. For a tube used for beverage transfer or the like, a hydrosilylation curing type millable silicone rubber is preferred due to the ability to use extrusion molding.

Due to heating at a high temperature, e.g. a temperature range of 100 to 250°C, the curable silicone rubber composition of the present invention cures to become the cured silicone rubber. The heating may be performed in a single stage or may be performed in two or more stages. The cured silicone rubber of the present invention has excellent water resistance, and the cured silicone rubber of the present invention may be used for a long time interval in contact with water.

The water resistant cured silicone rubber of the present invention may be used with advantage for a water supply component. No particular limitation is placed on the type of the water supply component as long as the water supply component is used in contact with water. Use is permissible in a water supply component for cleaning equipment, distribution lines, pools or waterworks. The water supply component may be used in applications such as beverage or food product application using warm water, hot water or steam. The water supply component may be also used in applications such as medical applications. Examples of components referred to by the expression "water supply component" include valves, hoses, tubes, packings, seals or joints. Such water supply components may be manufactured by conventional widely known methods. Specific examples of manufacturing methods include injection molding, extrusion molding or compression molding.

From the standpoints of handling processability during molding and strength as a water supply component, the cured silicone rubber preferably has a tensile strength greater than or equal to 2 MPa as specified by JIS K 6251, and preferably has an elongation greater than or equal to 50%.

No particular limitation is placed on the type or temperature of the water that contacts the water resistant cured silicone rubber of the present invention, and such contact may be with any type of water. However, the excellent water resistance of this cured silicone rubber may be realized in contact with water that contains the chloride ion (e.g. tap water, pool standing water, or the like), in contact with water at a temperature of 25°C to 100°C, particularly in contact with warm water at a temperature greater than or equal to 40°C, and particularly in contact with hot water at a temperature greater than or equal to 80°C. From the standpoint of effects on the human body, the concentration of the chloride ion in tap water is preferably less than or equal to 10 ppm, further preferably is less than or equal to 5 ppm, and most preferably is less than or equal to 1 ppm. However, there is no particular limitation for the concentration of the chloride ion in the water that contacts the water resistant cured silicone rubber of the present invention, and this concentration may be greater than or equal to 1 ppm, greater than or equal to 5 ppm, or greater than or equal to 10 ppm.

Examples

The present invention is described in detail below based on examples. Note that in the descriptions given below "parts" refer to parts by weight (mass).

Test pieces were prepared of the silicone rubber cured products of Practical Examples 1 to 19 and Comparative Examples 1 to 11 of the compositions shown in Tables 1 to 4. The meanings of the various terms used in Tables 1 to 4 are explained below.

[Silicone Rubber Base Compound A]

100 parts by weight of a copolymer raw rubber of dimethylsiloxane-methylvinylsiloxane capped at both molecular terminals with dimethylvinylsiloxane (degree of polymerization: 6,000) composed of 99.8 mol% dimethylsiloxane units and 0.13 mol% methylvinylsiloxane units, 42 parts by weight of dry-process silica fine powder (BET specific surface area: 300 mm2/g), and 14 parts by weight of dimethylsiloxane oligomer capped at both molecular terminals with silanol groups (viscosity: 30 mPa•s, as a plasticizer) were loaded into a kneader-mixer, and the mixture was kneaded uniformly. Thereafter, the mixture was kneaded for 60 minutes at 175°C to prepare the silicone rubber base compound A.

[Silicone Rubber Base Compound B]

100 parts by weight of a copolymer raw rubber of dimethylsiloxane-methylvinylsiloxane capped at both molecular terminals with dimethylvinylsiloxane (degree of polymerization: 6,000) composed of 99.8 mol% dimethylsiloxane units and 0.13 mol% methylvinylsiloxane units, 42 parts by weight of surface hydrophobized silica that was obtained by hydrophobizing dry-process silica (AEROSIL 300, specific surface area: 300 mm$^2$/g) using dimethyldichlorosilane (fumed silica of 0.01 μm average particle diameter), and 7.5 parts by weight of dimethylsiloxane oligomer capped at both molecular terminals with silanol groups (viscosity: 30 mPa•s, as a plasticizer) were loaded into a kneader-mixer, and the mixture was kneaded uniformly. Thereafter, the mixture was kneaded for 60 minutes at 175°C to prepare the silicone rubber base compound B.

[Silicone Rubber Base Compound C]

100 parts by weight of a copolymer raw rubber of dimethylsiloxane-methylvinylsiloxane capped at both molecular terminals with dimethylvinylsiloxane (degree of polymerization: 6,000) composed of 99.8 mol% dimethylsiloxane units

EP 2 666 824 B1

and 0.13 mol% methylvinylsiloxane units, 42 parts by weight of wet-process silica (NIPSIL LP), and 4.0 parts by weight of dimethylsiloxane oligomer capped at both molecular terminals with silanol groups (viscosity: 30 mPa•s, as a plasticizer) were loaded into a kneader-mixer, and the mixture was kneaded uniformly. Thereafter, the mixture was kneaded for 60 minutes at 175°C to prepare the silicone rubber base compound C.

[Curable Liquid Silicone Rubber Composition]

100 parts by weight of dimethylpolysiloxane capped at both molecular terminals with dimethylvinylsiloxy groups (viscosity: 40,000 mPa•s), 47 parts by weight of dry-process silica (BET specific surface area: 225 m$^2$/g), 8 parts by weight of hexamethyldisilazane, 3 parts by weight of water, and 0.6 parts by weight of dimethylsiloxane-methylvinylsiloxane copolymer capped at both molecular terminals with dimethylhydroxysiloxy groups (vinyl group content: about 10.9 mass%; viscosity: 20 mPa•s) were loaded into a Ross mixer, and the mixture was mixed until uniform at room temperature. Thereafter, the mixture was heat treated under vacuum at 200°C for 2 hours to prepare a flowable silica master batch.

To 100 parts by weight of the obtained silica master batch were added 8 parts by weight of dimethylsiloxane-methylvinylsiloxane copolymer capped at both molecular terminals with dimethylvinylsiloxy groups (vinyl group content: about 1.17 mass%; viscosity: 350 mPa•s), 3 parts by weight of dimethylsiloxane-methylhydrogensiloxane copolymer capped at both molecular terminals with trimethylsiloxy group (silicon-bonded hydrogen atom content: about 0.7 mass%; dynamic viscosity: 44 mm$^2$/s), 0.07 parts by weight of ethynylcyclohexanol, 0.08 parts by weight of methylvinylcyclosiloxane (mainly the tetramer), and the mixture was mixed at room temperature until uniform. Immediately prior to producing the cured test piece, a quantity of the 1,3-divinyl-1,1,3,3-tetramethyldisiloxane complex of platinum was added to obtain a platinum metal content in the composition of 8 ppm, and the mixture was mixed uniformly to prepare a curable liquid silicone rubber composition.

[Magnesium Oxide Master Batches A, B, and C]

20 parts by weight of a magnesium oxide (either magnesium oxide A (produced by Kyowa Chemical Industry Co., Ltd., average particle diameter: 0.7 μm), magnesium oxide B (produced by Kyowa Chemical Industry Co., Ltd., average particle diameter: 5.6 μm), or magnesium oxide C (produced by Kyowa Chemical Industry Co., Ltd., average particular diameter: 7.8 μm)) and 80 parts by weight of a copolymer raw rubber of dimethylsiloxane-methylvinylsiloxane capped at both molecular terminals with dimethylvinylsiloxane group (degree of polymerization: 6,000) and composed of 99.8 mol% dimethylsiloxane units and 0.13 mol% methylvinylsiloxane units were mixed using two rolls to prepare the respective master batch.

[Master Batch of Surface-treated Magnesium Oxide]

20 g of magnesium oxide A (produced by Kyowa Chemical Industry Co., Ltd., average particle diameter: 0.7 μm) was placed in a mortar, 0.6 g (3%) of vinyltrimethoxysilane was added, and the mixture was ground for 5 minutes using a pestle to obtain a surface-treated magnesium oxide. Then 20 parts by weight of the obtained surface-treated magnesium oxide was mixed with 80 parts by weight of a copolymer raw rubber of dimethylsiloxane-methylvinylsiloxane capped at both molecular terminals with dimethylvinylsiloxane groups (degree of polymerization: 6,000) and composed of 99.8 mol% dimethylsiloxane units and 0.13 mol% methylvinylsiloxane units using two rolls to prepare the master batch.

[Magnesium Hydroxide Master Batch]

20 parts by weight of magnesium hydroxide (produced by Konoshima Chemical Co., Ltd., MAGUSHIZU X-6, average particle diameter: 1.0 μm) and 80 parts by weight of a copolymer raw rubber of dimethylsiloxane-methylvinylsiloxane capped at both molecular terminals with dimethylvinylsiloxane group (degree of polymerization: 6,000) and composed of 99.8 mol% dimethylsiloxane units and 0.13 mol% methylvinylsiloxane units were mixed using two rolls to prepare the master batch.

[Magnesium Carbonate Master Batch]

20 parts by weight of magnesium carbonate (produced by Konoshima Chemical Co., Ltd., KINSEI, average particle diameter: 5.5 μm) and 80 parts by weight of a copolymer raw rubber of dimethylsiloxane-methylvinylsiloxane capped at both molecular terminals with dimethylvinylsiloxane group (degree of polymerization: 6,000) and composed of 99.8 mol% dimethylsiloxane units and 0.13 mol% methylvinylsiloxane units were mixed using two rolls to prepare the master batch.

9

[Hydrotalcite Master Batch]

20 parts by weight of hydrotalcite (produced by Kyowa Chemical Industry Co., Ltd., DHT-4A) and 80 parts by weight of a copolymer raw rubber of dimethylsiloxane-methylvinylsiloxane capped at both molecular terminals with dimethylvinylsiloxane group (degree of polymerization: 6,000) and composed of 99.8 mol% dimethylsiloxane units and 0.13 mol% methylvinylsiloxane units were mixed using two rolls to prepare the master batch.

[Calcium Hydroxide Master Batch]

20 parts by weight of calcium hydroxide (produced by Ube Material Industries, Ltd., CH-2N) and 80 parts by weight of a copolymer raw rubber of dimethylsiloxane-methylvinylsiloxane capped at both molecular terminals with dimethylvinylsiloxane group (degree of polymerization: 6,000) and composed of 99.8 mol% dimethylsiloxane units and 0.13 mol% methylvinylsiloxane units were mixed using two rolls to prepare the master batch.

[Silicone Raw Rubber]

The silicone raw rubber was a copolymer raw rubber of dimethylsiloxane-methylvinylsiloxane capped at both molecular terminals with dimethylvinylsiloxane groups (degree of polymerization: 6,000) and composed of 99.8 mol% dimethylsiloxane units and 0.13 mol% methylvinylsiloxane units.

[Peroxide 1]
Alkyl-type peroxide: 2,5-dimethyl-2,5-di(t-butyl peroxide)hexane
[Peroxide 2]
Acyl-type peroxide: bis(para-methylbenzoyl) peroxide

[Crosslinking Agent]

The crosslinking agent was a dimethylsiloxane-methylhydrogensiloxane copolymer capped at both molecular terminals with trimethylsiloxy groups (dynamic viscosity: 15 mm$^2$/s; silicon-bonded hydrogen atom content: about 0.8 mass%).

[Platinum-based Catalyst]

Platinum-1,3-divinyl-1,1,3,3-tetramethyldisiloxane complex

[Curing Retarder]

1-ethynyl-1-cyclohexanol

(Method of Producing Test Piece Using the Peroxide 1)

Each of the components listed in Table 1 or Table 3 were mixed uniformly using a pair of rolls. Then after press vulcanization for 10 minutes at 170°C, the sample was subjected to oven vulcanization for 4 hours at 200°C to obtain a 2 mm thick test piece.

(Method of Producing Test Piece Using the Peroxide 2)

Each of the components listed in Table 3 were mixed uniformly using a pair of rolls. Then after press vulcanization for 10 minutes at 120°C, the sample was subjected to oven vulcanization for 4 hours at 200°C to obtain a 2 mm thick test piece.

(Method for Producing Test Piece Using Hydrosilylation Catalyst)

Each of the components listed in Tables 1 to 3 were mixed uniformly using a pair of rolls. Then after press vulcanization for 10 minutes at 120°C, the sample was subjected to oven vulcanization for 4 hours at 200°C to obtain a 2 mm thick test piece. Further, the curing conditions were the same as those of the liquid silicone rubber composition of Table 4.
Each of the test pieces of Practical Examples 1 to 19 and Comparative Examples 1 to 11 were tested according to the appropriately selected below indicated tests.

[Chlorine Aqueous Solution Immersion Test (50°C)]

A test piece (about 10 cm square and 2 mm thick) was immersed for 30 days at 50°C in a sodium hypochlorite aqueous solution adjusted to give a chlorine concentration of 50 ppm [0.83 parts by weight of Baiyarakkusu (Kazusa Co., Ltd.)] + 999.2 parts by weight of ion exchanged water).

[Chlorine Aqueous Solution Immersion Test (85°C)] (Accelerated Aging Test)

A test piece (about 10 cm square and 2 mm thick) was immersed at 85°C in a sodium hypochlorite aqueous solution adjusted to give a chlorine concentration of 50 ppm [0.83 parts by weight of Baiyarakkusu (Kazusa Co., Ltd.)] + 999.2 parts by weight of ion exchanged water). Every 1 week, the sodium hypochlorite aqueous solution was changed. After 2 weeks, if there was any visually recognized abnormality (such as whitening), the sample was removed, and if there was no visually recognized abnormality, immersion was continued up to 42 or 45 days later.

(Evaluation of Visual Appearance)

Immediately after removal of the test piece from the sodium hypochlorite aqueous solution, the visual appearance of the test piece was observed.
The test piece was evaluated as "××" (cloudy) if the test piece was white and cloudy.
The test piece was evaluated as "×" if there were blisters greater than or equal to 1 mm in diameter.
If small blisters of less than 1 mm diameter were found, the test piece was evaluated as "o" because such small blisters disappeared from the test piece after drying, visual abnormalities such as white spots were not found visually, and strength was not recognized to have deteriorated.
Further, for all the visual abnormalities, whitening occurred within the rubber in the vicinity of the surface of the test piece, and there was no change of the surface itself in comparison to prior to immersion.
On the other hand, if there was no change of visual appearance, the test piece was evaluated as "◎".

(Weight Change Fraction)

The test sample removed from the sodium hypochlorite aqueous solution was set aside at room temperature for 3 days. Thereafter, the test sample was dried for 60 minutes at 85°C, weight was measured, and this weight was compared to the pre-immersion weight. The weight change fraction was determined according to the below listed formula.

$$\text{weight change fraction } (\%) = ((\text{post-immersion weight}) - (\text{pre-immersion weight}))/(\text{pre-immersion weight})$$

(Whiteness and Color Difference)

The test piece was placed on black paper, and the L value (whiteness (pre-treatment)) was measured using a color difference meter (manufactured by Minolta Camera Co., Ltd., Chromo Meter CR-200).
Next, the test sample that had been removed from the sodium hypochlorite aqueous solution was dried for 60 minutes at 85°C. Then the test sample was placed on black paper, and the L value (whiteness (post-treatment)) was measured using a color difference meter (manufactured by Minolta Camera Co., Ltd., Chromo Meter CR-200). Color difference was determined according to the below listed formula.

$$\Delta L \text{ (color difference)} = L \text{ value (post-treatment)} - L \text{ value (pre-treatment}$$

When the value of $\Delta L$ was positive, the test piece was shown to have whitened (including whitening in the form of white spots and white splotches). The L value of the utilized black paper by itself was 28.0.

[Steam Resistance Test]

The test piece (2 m thick, JIS No. 3 dumbbell shape) was placed in an autoclave, and steam pressure was adjusted to maintain 160°C for 200 hours. Then the test piece was removed from the autoclave, tensile strength was measured at room temperature, and the post-treatment tensile strength was expressed as the remaining fraction of tensile strength by normalization taking the pre-treatment tensile strength to be 100%.

[Initial physical properties]

Hardness (using a JIS type A durometer), tensile strength, and elongation were measured for the test piece of the silicone rubber cured product based on JIS K 6251.

Table 1

| | Practical Example 1 | Comparative Example 1 | Comparative Example 2 | Comparative Example 3 | Comparative Example 4 |
|---|---|---|---|---|---|
| Silicone rubber base compound A (parts) | 100 | 100 | 100 | 100 | 100 |
| Magnesium oxide master batch A (parts) | 0.4 | - | - | - | - |
| Calcium hydroxide master batch (parts) | - | - | 0.4 | - | - |
| Hydrotalcite master batch (parts) | - | - | - | 0.4 | - |
| Peroxide 1 (part) | 0.25 | 0.25 | 0.25 | 0.25 | - |
| Platinum catalyst (as Pt metal, ppm) | - | - | - | - | 1.2 |
| Crosslinking agent (part) | - | - | - | - | 1.05 |
| Curing retarder (ppm) | - | - | - | - | 80 |
| Chlorine aqueous solution immersion resistance test (50°C) | | | | | |
| No. of days of treatment | 30 | 30 | 30 | 30 | 30 |
| Visual evaluation | No change | Cloudy | No change | Cloudy | Cloudy |
| Weight change fraction (%) | - | - | - | - | -2.8 |
| Color difference ($\Delta L$) | - | - | - | - | 25.2 |
| Whiteness (pre-treatment) | - | - | - | - | 36.3 |
| Whiteness (post-treatment) | - | - | - | - | 61.5 |
| Steam resistance test | | | | | |
| Residual fraction of tensile strength (%) | 92 | 96 | 76 | 90 | - |

Table 2

| | Practical Example 2 | Practical Example 3 | Practical Example 4 | Practical Example 5 | Practical Example 6 | Practical Example 7 | Practical Example 8 | Practical Example 9 | Practical Example 10 | Practical Example 11 | Comparative Example 5 | Comparative Example 6 | Comparative Example 7 | Comparative Example 8 |
|---|---|---|---|---|---|---|---|---|---|---|---|---|---|---|
| Silicone rubber base compound A (parts) | 100 | 100 | 100 | 100 | 100 | - | - | 100 | 100 | - | 100 | - | - | - |
| Silicone rubber base compound B (parts) | - | - | - | - | - | 100 | - | - | - | - | - | - | 100 | - |
| Silicone rubber base compound C (parts) | - | - | - | - | - | - | 100 | - | - | - | - | - | - | 100 |
| Silicone raw rubber (part) | - | - | - | - | - | - | - | - | - | 100 | - | 100 | - | - |
| Magnesium oxide master batch A (parts) | 0.4 | 1 | 2 | - | - | 0.4 | 0.4 | 0.2 | - | 0.4 | - | - | - | - |
| Magnesium oxide master batch B (parts) | - | - | - | 0.4 | 1 | - | - | - | - | - | - | - | - | - |
| Magnesium oxide master batch C (parts) | - | - | - | - | - | - | - | - | 0.4 | - | - | - | - | - |
| Platinum catalyst (as Pt metal, ppm) | 1.2 | 1.2 | 1.2 | 1.2 | 1.2 | 1.2 | 1.2 | 1.2 | 1.2 | 1.2 | 1.2 | 1.2 | 1.2 | 1.2 |

EP 2 666 824 B1

13

(continued)

| | Practical Example 2 | Practical Example 3 | Practical Example 4 | Practical Example 5 | Practical Example 6 | Practical Example 7 | Practical Example 8 | Practical Example 9 | Practical Example 10 | Practical Example 11 | Comparative Example 5 | Comparative Example 6 | Comparative Example 7 | Comparative Example 8 |
|---|---|---|---|---|---|---|---|---|---|---|---|---|---|---|
| Curing retarder (ppm) | 80 | 80 | 80 | 80 | 80 | 80 | 80 | 80 | 80 | 80 | 80 | 80 | 80 | 80 |
| Crosslinking agent (part) | 1.05 | 1.05 | 1.05 | 1.05 | 1.05 | 1.05 | 1.05 | 1.05 | 1.05 | 1.05 | 1.05 | 1.05 | 1.05 | 1.05 |
| Chlorine aqueous solution immersion resistance test (85°C) | | | | | | | | | | | | | | |
| No. of days of treatment | 42 | 42 | 42 | 42 | 42 | 42 | 42 | 42 | 42 | 42 | 14 | 14 | 14 | 14 |
| Visual evaluation | ◎ | ◎ | ◎ | ◎ | ◎ | ◎ | ◎ | ○ | ○ | ○ | ×× | ×× | × | ×× |
| Weight change fraction (%) | -0.5 | -0.5 | -0.5 | -0.6 | -0.6 | 0.1 | -0.6 | -0.6 | -1.4 | -0.8 | -2.5 | -7 | -1.5 | -3 |
| Color difference (ΔL) | -2.4 | -1.4 | -5.2 | 0.8 | 1.3 | -1.2 | -5 | -2.2 | 2 | -0.3 | 22.9 | 52.4 | 4.3 | 34.4 |
| Whiteness (pre-treatment) | 41.7 | 47.5 | 55.9 | 37.6 | 39.9 | 41.6 | 48.1 | 39.5 | 36.6 | 36.9 | 36.6 | 35.1 | 37.2 | 42.9 |
| Whiteness (post-treatment) | 39.3 | 46.1 | 50.7 | 38.4 | 41.2 | 40.4 | 43.1 | 37.3 | 38.6 | 36.6 | 59.5 | 87.5 | 41.4 | 77.3 |
| Initial physical properties | | | | | | | | | | | | | | |
| Hardness | 53 | 53 | 52 | 53 | 52 | 51 | 48 | 53 | 53 | NA | 53 | NA | 51 | 48 |
| Tensile strength (MPa) | 9.8 | 9.9 | 9.4 | 9.4 | 9.5 | 10.3 | 8.9 | 9.5 | 9.6 | NA | 9.7 | NA | 10.1 | 9 |
| Elongation (%) | 990 | 960 | 950 | 940 | 930 | 1030 | 370 | 960 | 990 | NA | 980 | NA | 1020 | 380 |
| * NA: could not be measured | | | | | | | | | | | | | | |

Table 3

| | Practical Example 12 | Practical Example 13 | Practical Example 14 | Practical Example 15 | Practical Example 16 | Practical Example 17 | Practical Example 18 | Comparative Example 9 | Comparative Example 10 |
|---|---|---|---|---|---|---|---|---|---|
| Silicone rubber base compound A (parts) | 100 | 100 | 100 | 100 | 100 | 100 | 100 | 100 | 100 |
| Magnesium oxide master batch A (parts) | 0.2 | 0.4 | 0.2 | 0.4 | - | - | - | - | - |
| Surface-treatment magnesium oxide master batch (parts) | - | - | - | - | 0.4 | - | - | - | - |
| Magnesium hydroxide master batch (parts) | - | - | - | - | - | 0.4 | - | - | - |
| Magnesium carbonate master batch (parts) | - | - | - | - | - | - | 0.4 | - | - |
| Peroxide 1 | 0.25 | 0.25 | - | - | - | - | - | 0.25 | - |
| Peroxide 2 | - | - | 0.6 | 0.6 | - | - | - | - | 0.6 |
| Platinum catalyst (as Pt metal, ppm) | - | - | - | - | 1.2 | 1.2 | 1.2 | - | - |
| Crosslinking agent (part) | - | - | - | - | 80 | 80 | 80 | - | - |
| Curing retarder (ppm) | - | - | - | - | 1.05 | 1.05 | 1.05 | - | - |
| Chlorine aqueous solution immersion resistance test (85°C) | | | | | | | | | |
| No. of days of treatment | 45 | 45 | 42 | 42 | 42 | 42 | 42 | 45 | 42 |
| Visual evaluation | ◎ | ◎ | ◎ | ◎ | ◎ | ◎ | ○ | ×× | ×× |
| Weight change fraction (%) | -0.4 | -0.5 | -0.9 | -1.1 | -0.4 | -0.4 | -0.6 | -3.2 | -7.1 |
| Color difference ($\Delta L$) | -1.2 | -2.9 | -4.4 | -6.2 | -0.1 | -1.1 | -1.2 | 18.3 | 28.8 |
| Whiteness (pre-treatment) | 39.2 | 41.8 | 41.6 | 44.4 | 41.7 | 38.8 | 38.7 | 37.2 | 36.8 |
| Whiteness (post-treatment) | 38.1 | 38.9 | 37.3 | 38.2 | 41.6 | 37.8 | 37.5 | 55.6 | 65.6 |

(continued)

| Initial physical properties | | | | | | | | | |
|---|---|---|---|---|---|---|---|---|---|
| Hardness | 51 | 51 | 51 | 53 | 55 | 56 | 56 | 51 | 52 |
| Tensile strength (MPa) | 9.58 | 9.31 | 9.6 | 9.9 | 9.51 | 10.5 | 10.8 | 9.99 | 9.1 |
| Elongation (%) | 606 | 590 | 503 | 520 | 676 | 682 | 694 | 606 | 494 |

Table 4

|  | Practical Example 19 | Comparative Example 11 |
|---|---|---|
| Curable liquid silicone rubber composition (parts) | 100 | 100 |
| Magnesium oxide master batch A (parts) | 0.4 | - |
| Chlorine aqueous solution immersion resistance test (85°C) | | |
| No. of days of treatment | 42 | 21 |
| Visual evaluation | ◎ | × |
| Weight change fraction (%) | -1.3 | -1.8 |
| Color difference (△L) | -3.3 | 5.7 |
| Whiteness (pre-treatment) | 41.2 | 36.9 |
| Whiteness (post-treatment) | 37.9 | 42.6 |
| Initial physical properties | | |
| Hardness | 59 | 60 |
| Tensile strength (MPa) | 10.4 | 10.4 |
| Elongation (%) | 480 | 520 |

Table 1 shows the effect of blending magnesium oxide. By comparison of Practical Example 1 (in which magnesium oxide was blended) to Comparative Example 1 (in which magnesium oxide was not blended), it is understood that there was a big difference in resistance to aqueous chlorine even in the chlorine aqueous solution immersion resistance test at the relatively low temperature of 50°C. Further, it is understood that aqueous chlorine resistance was insufficient for Comparative Example 3, in which hydrotalcite was blended in place of the magnesium oxide. Also, steam resistance is understood to have deteriorated in Comparative Example 2, in which calcium hydroxide was blended in place of the magnesium oxide.

Table 2 shows results of evaluations when using hydrosilylation curing type silicone rubber compositions. From a comparison between the Practical Examples 1 to 11 and the Comparative Examples 5 to 8, the effect of blended of magnesium oxide was found in the accelerated aging test at 85°C. When the compounded amount of magnesium oxide was low (Practical Example 9) and when the particle diameter of the magnesium oxide was large (Practical Example 10), although the test results worsened somewhat, such results would not have been a problem for practical use. Further, it is understood that the deterioration became somewhat great when silica was not blended (Practical Example 11). Transparency of the cured product was sufficient for Practical Examples 9 to 11, blisters of a size so as to affect physical properties were not found, and thus these Practical Examples 9 to 11 were determined to pass testing.

Table 3 shows the effect of differences in the silicone rubber curing method and differences in the magnesium compound. An effect similar to that of magnesium oxide was recognized for both magnesium hydroxide and magnesium carbonate. Further, the effect of magnesium carbonate is understood to be inferior to that of the other magnesium compounds. This effect was confirmed not to change even if the surface of the magnesium oxide was treated using a silane coupling agent. It is thus understood to be permissible, as may be required, to treat the surface of the magnesium compound.

Table 4 shows results of evaluations after using a curable liquid silicone rubber composition. Based on comparison between the Practical Example 19 and the Comparative Example 11, blending of magnesium oxide was recognized to be effective. Further, the liquid silicone rubber displayed good aqueous chlorine resistance in comparison to the millable type silicone rubber composition.

Industrial Applicability

The cured silicone rubber of the present invention can be used in water supply components used in contact with water. The water supply component is exemplified by valves, hoses, tubes, packings, seals, and joints. Further, the curable silicone rubber composition of the present invention is suitable for manufacturing this type of cured silicone rubber.

Because the present invention can be suitably used for a silicone component in contact with chloride ion-containing water (tap water) for a long time interval, the present invention can be used with particular advantage in the fields of beverages and food products.

The present invention can be used with particular advantage for water supply components that are constructed from silicone and that contact warm water, hot water, or steam. Thus, the present invention is suitable for preparatory equipment, bathing equipment, washing devices, piping, pools, waterworks, or the like used for kitchens, bathrooms, or the like.

Further, the silicone rubber of the present invention can be used for a medical treatment component that is used in contact with stomach acid or acidic cleaning solutions. The silicone rubber of the present invention is suitable for gastrostomy catheters, balloons or catheter balloon, dialysis machines, hemodialysis units, and implant components.

## Claims

1. A water supply component comprising a water resistant cured silicone rubber;
the water resistant cured silicone rubber obtained by curing a curable silicone rubber composition;
the silicone rubber composition comprising at least one type of magnesium compound selected from the group consisting of magnesium oxide, magnesium hydroxide, and magnesium carbonate, wherein the composition comprises less than or equal to 3 %wt. of magnesium compound.

2. A water supply component according to claim 1, wherein the compounded amount of magnesium compound in the silicone rubber composition is greater than or equal to 0.01 wt.% based on a total weight of the silicone rubber composition.

3. A water supply component according to claim 1 or 2, wherein the average particle diameter of the magnesium compound in the silicone rubber composition is less than or equal to 10 $\mu$m; and the magnesium compound is surface treated.

4. A water supply component according to any one of claims 1 to 3, wherein the silicone rubber composition further comprises silica microparticles.

5. A water supply component according to claim 4, wherein the compounded amount of the silica microparticles in the silicone rubber composition is greater than or equal to 2 wt.% based on the total weight of the rubber composition; a BET specific surface area of the silica microparticles is 30 to 400 m$^2$/g; and the silica microparticles are at least one type selected from the group consisting of dry-process silicas, wet-process silicas, and a mixture of dry-process silicas and wet-process silicas.

6. A water supply component according to any one of claims 1 to 5, wherein the silicone rubber composition is a hydrosilylation curing type composition or a peroxide curing type composition.

7. A water supply component according to any one of claims 1 to 6, wherein the water supply component is selected from the group consisting of valves, hoses, tubes, packings, seals, and joints.

8. A water supply component according to any one of claims 1-7 used in contact with water, wherein a temperature of the water is 25°C to 100°C; the water includes a chloride ion; the concentration of the chloride ion is greater than or equal to 1 ppm; and the water is tap water.

9. A water supply component according to any one of claims 1-8 for use in beverage or food product application or medical applications.

10. A method for improving water resistance of a cured silicone rubber;
the method comprising a step of including, in the cured silicone rubber, at least one type of magnesium compound selected from the group consisting of magnesium oxide, magnesium hydroxide, and magnesium carbonate, wherein the magnesium compound is present in an amount of less than or equal to 3 %wt. in the cured silicone rubber.

11. Use of at least one type of magnesium compound selected from the group consisting of magnesium oxide, magnesium hydroxide, and magnesium carbonate;
for improving water resistance of a cured silicone rubber, wherein the magnesium compound is present in an amount of less than or equal to 3 %wt. in the cured silicone rubber.

12. Use according to claim 11 for improving water resistance of a cured silicone rubber in water supply components for preparatory equipment, bathing equipment, washing devices, piping, pools, waterworks, or the like used for kitchens, bathrooms, or the like.

13. Use according to claim 11 for improving water resistance of a cured silicone rubber in medical treatment components in contact with stomach acid or acidic cleaning solutions, said medical treatment components selected from the group gastrostomy catheters, balloons or catheter balloon, dialysis machines, hemodialysis units, and implant components.

**Patentansprüche**

1. Eine Wasserzuführungskomponente, die einen wasserbeständigen gehärteten Silikonkautschuk beinhaltet; wobei der wasserbeständige gehärtete Silikonkautschuk durch das Härten einer härtbaren Silikonkautschukzusammensetzung erhalten wird; wobei die Silikonkautschukzusammensetzung mindestens einen Typ Magnesiumverbindung beinhaltet, ausgewählt aus der Gruppe, bestehend aus Magnesiumoxid, Magnesiumhydroxid und Magnesiumcarbonat, wobei die Zusammensetzung zu weniger als oder gleich 3 Gew.-% Magnesiumverbindung beinhaltet.

2. Wasserzuführungskomponente gemäß Anspruch 1, wobei die beigemischte Menge an Magnesiumverbindung in der Silikonkautschukzusammensetzung bezogen auf ein Gesamtgewicht der Silikonkautschukzusammensetzung mehr als oder gleich 0,01 Gew.-% beträgt.

3. Wasserzuführungskomponente gemäß Anspruch 1 oder 2, wobei der durchschnittliche Partikeldurchmesser der Magnesiumverbindung in der Silikonkautschukzusammensetzung weniger als oder gleich 10 $\mu$m beträgt; und die Magnesiumverbindung oberflächenbehandelt ist.

4. Wasserzuführungskomponente gemäß einem der Ansprüche 1 bis 3, wobei die Silikonkautschukzusammensetzung ferner Siliciumdioxidmikropartikel beinhaltet.

5. Wasserzuführungskomponente gemäß Anspruch 4, wobei die beigemischte Menge der Siliciumdioxidmikropartikel in der Silikonkautschukzusammensetzung bezogen auf das Gesamtgewicht der Kautschukzusammensetzung mehr als oder gleich 2 Gew.-% beträgt; eine spezifische BET-Oberfläche der Siliciumdioxidmikropartikel 30 bis 400 m$^2$/g beträgt; und die Siliciumdioxidmikropartikel mindestens ein Typ sind, ausgewählt aus der Gruppe, bestehend aus Trockenverfahren-Siliciumdioxiden, Nassverfahren-Siliciumdioxiden und einer Mischung aus Trockenverfahren-Siliciumdioxiden und Nassverfahren-Siliciumdioxiden.

6. Wasserzuführungskomponente gemäß einem der Ansprüche 1 bis 5, wobei die Silikonkautschukzusammensetzung eine Zusammensetzung des Typs Hydrosilylierungshärten oder eine Zusammensetzung des Typs Peroxidhärten ist.

7. Wasserzuführungskomponente gemäß einem der Ansprüche 1 bis 6, wobei die Wasserzuführungskomponente aus der Gruppe ausgewählt ist, bestehend aus Ventilen, Schläuchen, Röhren, Packungen, Dichtungen und Verbindungen.

8. Wasserzuführungskomponente gemäß einem der Ansprüche 1-7, die in Kontakt mit Wasser verwendet wird, wobei eine Temperatur des Wassers 25 °C bis 100 °C beträgt, das Wasser ein Chloridion umfasst, die Konzentration des Chloridions mehr als oder gleich 1 ppm beträgt und das Wasser Leitungswasser ist.

9. Wasserzuführungskomponente gemäß einem der Ansprüche 1-8 zur Verwendung in der Getränke- oder Lebensmittelproduktanwendung oder medizinischen Anwendungen.

10. Ein Verfahren zum Verbessern der Wasserbeständigkeit eines gehärteten Silikonkautschuks; wobei das Verfahren einen Schritt des Einschließens, in dem gehärteten Silikonkautschuk, mindestens eines Typs Magnesiumverbindung, ausgewählt aus der Gruppe, bestehend aus Magnesiumoxid, Magnesiumhydroxid und Magnesiumcarbonat, beinhaltet, wobei die Magnesiumverbindung in dem gehärteten Silikonkautschuk in einer Menge von weniger als oder gleich 3 Gew.-% vorhanden ist.

11. Eine Verwendung mindestens eines Typs Magnesiumverbindung, ausgewählt aus der Gruppe, bestehend aus Magnesiumoxid, Magnesiumhydroxid und Magnesiumcarbonat, zum Verbessern der Wasserbeständigkeit eines gehärteten Silikonkautschuks, wobei die Magnesiumverbindung in dem gehärteten Silikonkautschuk in einer Menge von weniger als oder gleich 3 Gew.-% vorhanden ist.

12. Verwendung gemäß Anspruch 11 zum Verbessern der Wasserbeständigkeit eines gehärteten Silikonkautschuks in Wasserzuführungskomponenten für Vorbereitungsausrüstung, Badeausrüstung, Waschvorrichtungen, Rohrleitungen, Becken, Wasseranlagen oder dergleichen, die für Küchen, Badezimmer oder dergleichen verwendet werden.

13. Verwendung gemäß Anspruch 11 zum Verbessern der Wasserbeständigkeit eines gehärteten Silikonkautschuks in Komponenten für medizinische Behandlung in Kontakt mit Magensäure oder sauren Reinigungslösungen, wobei die Komponenten für medizinische Behandlung aus der Gruppe aus Gastrostomiekathetern, -ballons oder -katheterballons, Dialysemaschinen, Hämodialyseeinheiten und Implantatkomponenten ausgewählt sind.

## Revendications

1. Un composant d'alimentation en eau comprenant un caoutchouc de silicone durci résistant à l'eau ;
   le caoutchouc de silicone durci résistant à l'eau étant obtenu en durcissant une composition de caoutchouc de silicone durcissable ;
   la composition de caoutchouc de silicone comprenant au moins un type de composé du magnésium sélectionné dans le groupe constitué d'oxyde de magnésium, d'hydroxyde de magnésium, et de carbonate de magnésium, la composition comprenant une quantité inférieure ou égale à 3 % en poids de composé du magnésium.

2. Un composant d'alimentation en eau selon la revendication 1, dans lequel la quantité combinée de composé du magnésium dans la composition de caoutchouc de silicone est supérieure ou égale à 0,01 % en poids rapporté à un poids total de la composition de caoutchouc de silicone.

3. Un composant d'alimentation en eau selon la revendication 1 ou la revendication 2, dans lequel le diamètre de particule moyen du composé du magnésium dans la composition de caoutchouc de silicone est inférieur ou égal à 10 $\mu$m ; et le composé du magnésium est traité en surface.

4. Un composant d'alimentation en eau selon n'importe laquelle des revendications 1 à 3, dans lequel la composition de caoutchouc de silicone comprend en outre des microparticules de silice.

5. Un composant d'alimentation en eau selon la revendication 4, dans lequel la quantité combinée des microparticules de silice dans la composition de caoutchouc de silicone est supérieure ou égale à 2 % en poids rapporté au poids total de la composition de caoutchouc ; une surface spécifique BET des microparticules de silice va de 30 à 400 $m^2$/g ; et les microparticules de silice sont d'au moins un type sélectionné dans le groupe constitué de silices traitées par voie sèche, de silices traitées par voie humide, et d'un mélange de silices traitées par voie sèche et de silices traitées par voie humide.

6. Un composant d'alimentation en eau selon n'importe laquelle des revendications 1 à 5, dans lequel la composition de caoutchouc de silicone est une composition de type durcissement par hydrosilylation ou une composition de type durcissement par peroxyde.

7. Un composant d'alimentation en eau selon n'importe laquelle des revendications 1 à 6, le composant d'alimentation en eau étant sélectionné dans le groupe constitué de valves, de tuyaux, de tubes, de garnitures, de joints d'étanchéité, et de joints.

8. Un composant d'alimentation en eau selon n'importe laquelle des revendications 1 à 7 utilisé en contact avec de l'eau, dans lequel une température de l'eau va de 25 °C à 100 °C ; l'eau inclut un ion chlorure ; la concentration de l'ion chlorure est supérieure ou égale à 1 ppm ; et l'eau est de l'eau du robinet.

9. Un composant d'alimentation en eau selon n'importe laquelle des revendications 1 à 8 pour son utilisation dans une application de boisson ou de produit alimentaire ou dans des applications médicales.

10. Un procédé pour améliorer la résistance à l'eau d'un caoutchouc de silicone durci ; le procédé comprenant une étape consistant à inclure, dans le caoutchouc de silicone durci, au moins un type de composé du magnésium sélectionné dans le groupe constitué d'oxyde de magnésium, d'hydroxyde de magnésium, et de carbonate de magnésium, le composé du magnésium étant présent dans une quantité inférieure ou égale à 3 % en poids dans le caoutchouc de silicone durci.

11. Utilisation d'au moins un type de composé du magnésium sélectionné dans le groupe constitué d'oxyde de magnésium, d'hydroxyde de magnésium, et de carbonate de magnésium ;
pour améliorer la résistance à l'eau d'un caoutchouc de silicone durci, le composé du magnésium étant présent dans une quantité inférieure ou égale à 3 % en poids dans le caoutchouc de silicone durci.

12. Utilisation selon la revendication 11 pour améliorer la résistance à l'eau d'un caoutchouc de silicone durci dans des composants d'alimentation en eau pour des équipements préparatoires, des équipements de bain, des dispositifs de lavage, de la tuyauterie, des pièces d'eau, des installations d'adduction d'eau, ou analogue utilisés pour des cuisines, des salles de bain, ou analogue.

13. Utilisation selon la revendication 11 pour améliorer la résistance à l'eau d'un caoutchouc de silicone durci dans des composants de traitement médical en contact avec de l'acide gastrique ou des solutions de nettoyage acides, lesdits composants de traitement médical étant sélectionnés dans le groupe de cathéters pour gastrostomie, de ballonnets ou ballonnet de cathéter, de dialyseurs, d'appareils d'hémodialyse, et de composants d'implant.

**EP 2 666 824 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011009673 A
- JP H06200080 B